# EUROPÄISCHE PATENTSCHRIFT

(11) **EP 1 053 858 B1**
(45) Veröffentlichungstag und Bekanntmachung des Hinweises auf die Patenterteilung: **02.08.2006**
(21) Anmeldenummer: 00106357.7
(22) Anmeldetag: 24.03.2000
(51) Int. Cl.: B29C 49/42, B29C 49/04, B29L 23/00

(54) **Verfahren und Vorrichtung zum Herstellen von hohlkörperförmigen Artikeln aus thermoplastischem Kunststoff durch Saugblasen**
Method and apparatus for producing hollow shaped articles of thermoplastic material by suction and blowing
Procédé et dispositif pour fabriquer des articles de forme creuse en matière thermoplastique par aspiration et soufflage

(30) Priorität: 15.05.1999 DE 19922490
(43) Veröffentlichungstag der Anmeldung: 22.11.2000
(73) Patentinhaber: Kautex Maschinenbau GmbH, 53229 Bonn (DE)
(72) Erfinder: Küpper, Rudolf, 53819 Neunkirchen-Seelscheid (DE)
(74) Vertreter: Valentin, Ekkehard

(56) Entgegenhaltungen:
- EP-A- 0 688 658
- EP-A- 0 893 230
- WO-A-96/28295
- DE-A- 2 364 663
- DE-B- 1 163 000
- US-A- 4 645 447
- US-A- 5 589 205
- SCHUELLER F: "MANUFACTURE OF INDUSTRIAL MOULDINGS USING THE 3D BLOW MOULDING METHOD" TECHNISCHE MITTEILUNGEN KRUPP, FRIED.KRUPP GMBH FACHBUECHEREI. ESSEN, DE, Nr. 2, Dezember 1998 (1998-12), Seiten 47-53, XP000799258 ISSN: 0930-9276
- PATENT ABSTRACTS OF JAPAN vol. 017, no. 455 (M-1466), 20. August 1993 (1993-08-20) & JP 05 104613 A (TONEN CHEM CORP), 27. April 1993 (1993-04-27)
- PATENT ABSTRACTS OF JAPAN vol. 014, no. 579 (M-1063), 25. Dezember 1990 (1990-12-25) & JP 02 251414 A (ISHIKAWAJIMA HARIMA HEAVY IND CO LTD), 9. Oktober 1990 (1990-10-09)
- PATENT ABSTRACTS OF JAPAN vol. 016, no. 132 (M-1229), 3. April 1992 (1992-04-03) & JP 03 293112 A (GAKUNAN YUKI KK), 24. Dezember 1991 (1991-12-24)

## Beschreibung

Die Erfindung betrifft ein Verfahren und eine Vorrichtung zum Herstellen von hohlkörperförmigen Artikeln aus thermoplastischem Kunststoff durch Saugblasen, umfassend ein aus zwei in eine Offen- und in eine verriegelbare Schließstellung bewegbaren Formhälften bestehendes Werkzeug, dem zumindest unten ein die Artikelkavität an der Unterseite verschließender Schieber zugeordnet ist, eine unten an das Werkzeug angeschlossene Saugvorrichtung und mindestens einen einen Vorformlingsschlauch bereitstellenden Extrusionskopf, der von mindestens einem Extruder mit dem Kunststoffmaterial gespeist wird. Ein solches Verfahren und eine derartige Vorrichtung ist durch "Technische Mitteilungen Krupp, Nr. 2, Dezember 1998, Seiten 47 bis 53" bekanntgeworden.

Beim Saugblasverfahren wird der Vorformlingsschlauch unmittelbar aus dem Extrusions- bzw. Coextrusionskopf in das geschlossene Werkzeug extrudiert bzw. durch das geschlossene Blaswerkzeug gesaugt, wobei er auf einem von der werkzeugunterseitig angeordneten Saugvorrichtung erzeugten Luftpolster in die Endposition gleitet. Nach dem Schließen beginnt dann der eigentliche Blasvorgang. Eine Saugblasmaschine bietet gegenüber den konventionellen Blasformmaschinen, wie beispielsweise durch die DE 37 22 340 A1 bekanntgeworden, mehrere Vorteile. Da der Vorformlingsschlauch in das geschlossene Blaswerkzeug eingesaugt wird, können keine unerwünschten Abquetschungen auftreten. Da die Saugblasartikel folglich keine Schweißnähte haben, wird die Schließkraft im wesentlichen lediglich zum Zuhalten des Blaswerkzeuges gegen die durch den Blasdruck der Saugvorrichtung aufgebauten Kräfte benötigt. Für die Schließeinheit ergibt sich damit ein deutlich niedrigerer Energieverbrauch, wie auch eine aufwendige Schließregelung mit Positions- und Geschwindigkeitsregler entfällt, die bei den bekannten Blasformmaschinen ansonsten verfahrenstechnisch für eine optimale Schweißnahtausbildung notwendig sind.

Wenngleich somit der technische Aufwand erheblich geringer und eine solche Saugblasmaschine damit preiswerter wird, muß dennoch wegen des diskontinuierlichen Betriebes ein sehr aufwendiger, teuerer Speicherkopf eingesetzt werden, weil der Vorformlingsschlauch so schnell (wenige Sekunden) ausgestoßen werden muß, wie es das anschließende Saugblasen erfordert. Der Speicherkopf weist deshalb mindestens einen Stauraum auf, in dem das für die Herstellung eines Vorformlingsschlauches benötigte Material zunächst gespeichert und dann mit einem Kolben durch die Düse ausgepresst bzw. -gestoßen wird. Die aus derartigen Speicherköpfen herrührenden Probleme und Schwierigkeiten, die zu zahlreichen Entwicklungen geführt haben, werden durch die DE 36 20 144 A1 und DE 36 35 334 A1 deutlich.

Durch die EP-A2-0 893 230 ist es bekannt geworden, daß eine Blasformmaschine in einen vollautomatischen Herstellungsprozeß eingebunden werden kann, wenn der schlauchartige Vorformling von einem Speicherkopf durch einen Greifer eines gegebenenfalls frei programmierbaren Sechs-Achsen-Einlegeroboters abgenommen und entsprechend der durch die Kavität der Blasform vorgegebenen Kontur in die Kavität eingelegt wird.

Aus der DE-B-1 163 000 ist es bekannt, einen aus zwei halbkreisförmigen Kammern bestehenden Greifer vorzusehen, die sich im geschlossenen Zustand an den Außenumfang des Vorformlings anlegen. In dem Innenraum der Kammern kann ein Unterdruck erzeugt werden.

Der Erfindung liegt die Aufgabe zugrunde, ein Verfahren und eine Vorrichtung der gattungsgemäßen Art zu schaffen, mit denen sich das Saugblasen der hohlkörperförmigen Artikel vereinfachen und verbessern lässt.

Diese Aufgabe wird mit einem Verfahren gemäß dem Anspruch 1 dadurch gelöst, daß der Extrusionsprozeß der Vorformlingsbildung vom Prozeß des Saugblasens entkoppelt wird, derart, daß gleichzeitig mit dem Saugblasen eines in das Werkzeug eingeführten Vorformlings zu einem Fertigartikel der jeweils nachfolgende Vorformling extrudiert wird, und wobei die Zuführung des Vorformlings auf den Einsaugprozess abgestimmt erfolgt. Indem somit das Einsaugen bzw. der Saugblasprozeß durch die Entkopplung unabhängig von der Vorformlingsherstellung ist, lassen sich mehrere Vorteile gleichzeitig erreichen. Es kann beim Saugblasen nicht nur ohne einen Speicherkopf gearbeitet werden, sondern wie beim 3D-Blasformen ein 6-Achsen-Roboter-Einlegeprozeß mit dem Einsaugen kombiniert werden, weil es die entkoppelte Betriebsweise ermöglicht, den Roboterarm zwischen die Werkzeugform und den Extrusionskopf zu bringen. Weiterhin lässt sich vorteilhaft auch die sequentielle Coextrusion durchführen, bei der zueinander kompatible Materialien unterschiedlicher Seifigkeit verarbeitet werden, woraus sich unterschiedliche Ausstoßgeschwindigkeiten des kontinuierlich oder diskontinuierlich ausgestoßenen Vorformlings ergeben. Aufgrund der Entkopplung braucht der rheologische Vorgang nicht mehr mit dem Einstoßen in Einklang gebracht zu werden. Eine Anpassung an die Zykluszeit entfällt beim diskontinuierlichen Extrudieren.

Bei einer Vorrichtung zum Durchführen des Verfahrens gemäß dem Anspruch 2 ist dem Extrusionskopf erfindungsgemäß ein gleichzeitig mit dem Saugblasen eines in das Werkzeug eingeführten Vorformlings zu einem Fertigprodukt den extrudierten, nachfolgenden Vorformlingsschlauch abnehmender und der Artikelkavität auf den Einsaugprozess abgestimmt zuführender Schlauchzubringer zugeordnet. Durch die Verwendung eines beim konventionellen Blasformen seit vielen Jahrzehnten bekannten Schlauchzubringers, der vorzugsweise auch als frei programmierbarer 6-Achsen-Roboter ausgeführt sein kann, nunmehr auch beim Saugblasen, lässt sich in verblüffender Weise ein betrieb mit kontinuierlicher Extrusion bzw. Coextrusion des Vorformlingsschlauches erreichen, was das Saugblasen von Hohlkörper-Artikeln ohne einen Speicherkopf ermöglicht. Das die Saugblasmaschine zwar mit dem Schlauchzubringer kombiniert, jedoch erfindungsgemäß von diesem entkoppelt ist, kann dieser nämlich den ausgestoßenen Vorformlingsschlauch abnehmen, so daß der Extrusions- bzw. Coextrusionskopf während der Zeit, in der der Schlauchzubringer den Vorformlingsschlauch dem Werkzeug der Saugblasmaschine zuführt, sogleich einen weiteren Vorformlingsschlauch bereitstellen kann, der dann sogleich wieder von dem in der Zwischenzeit in seine Ausgangslage zurückgefahrenen Schlauchzubringer abgenommen wird.

Nach einem Vorschlag der Erfindung lässt sich der Schlauchzubringer heb- und senkbar ausbilden. Er ist somit in der Lage, den Abstand zu dem oberhalb des Blasformwerkzeuges angeordneten Extrusions- bzw. Coextrusionskopf zu durchfahren und damit den an der Düse des Kopfes abgenommenen Vorformlingsschlauch in die Artikelkavität des Saugblasform-Werkzeuges einzubringen und anschließend wieder in die Übernahmeposition zurückzufahren, so daß der kontinuierliche Schlauchaustritt nicht beeinträchtigt wird.

Wenn der Schlauchzubringer vorteilhaft mit Mitteln zum Schneiden, Verschweißen und/oder Vorblasen der Vorformlingsschläuche versehen ist, kann beispielsweise eine separate Schneideeinrichtung zum Abtrennen der gewünschten Länge des Vorformlingsschlauches von dem kontinuierlich ausgestoßenen Schlauch entfallen. Das Vorblasen mittels eines in dem Schlauchzubringer integrierten Blasdornes unterstützt das Einlegen des Vorformlingsschlauches in die Artikelkavität des geschlossenen Blasform-Werkzeuges. Damit ist es sogar möglich, ein Kalibrieren des Artikles vorzunehmen.

Bei einer bevorzugten Ausführung des Schlauchzubringers weist dieser zwei aufeinanderzu und voneinanderweg bewegbare Greiferarme auf, die mit komplementären, halbschalenförmigen Hohlräumen ausgebildet sind, in die Vakuumdüsen münden. Nach der Abnahme eines Vorformlingsschlauches und schließen der Greiferarme, so daß diese den vom Extrusions- bzw. Coextrusionskopf abgequetschten oder abgeschnittenen Vorformlingsschlauch festhalten, läßt sich bei Beaufschlagung der an eine Vakuumquelle angeschlossenen Düsen das von dem Sauggreifer umschlossene Schlauchende aufweiten, d.h. an die den Hohlraum begrenzende Wandung ansaugen. Damit wird eine Stabilisierung des aufgeweiteten Schlauchendes erreicht, was es in vorteilhafter Weise ermöglicht, einen von außen in den Greifer-Hohlraum geführten Blasdorn in diesen Teil des Vorformlingsschlauches einzustechen und den Vorformling vorzublasen.

Weitere Einzelheiten und Vorteile der Erfindung ergeben sich aus den Patentansprüchen und der nachfolgenden Beschreibung von in den Zeichnungen schematisch dargestellten Ausführungsbeispielen des Gegenstandes der Erfindung. Es zeigen:
- Fig. 1:: als Einzelheit einer Saugblas-Formmaschine ein geöffnetes Werkzeug mit darüber angeordnetem Extrusions- bzw. Coextrusionskopf und übernahmebereitem Schlauchzubringer, vor der Entnahme des fertigen Artikels aus dem geöffneten Werkzeug;
- Fig. 2:: im Querschnitt eine Ausführung eines Schlauchzubringers mit zwei beweglichen Greiferarmen, die in der geöffneten Position zur Übernahme eines Vorformlingsschlauches dargestellt sind;
- Fig. 3:: die Greiferarme nach Fig. 2 in ihrer geschlossenen Position; und
- Fig. 4:: das in den Greiferarmen gemäß Fig. 2 eingeschlossene, durch Einleiten von Vakuum aufgeweitete Schlauchende.

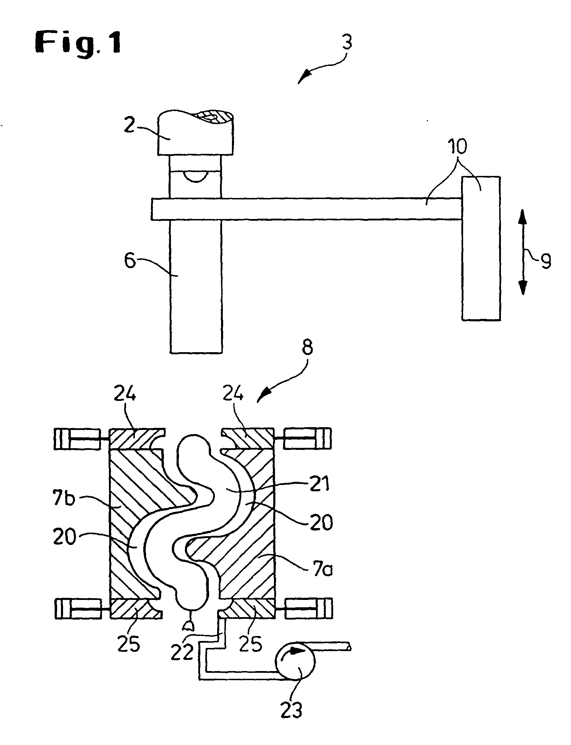

Eine in ihrer Gesamtheit in Figur 1 nicht dargestellte Saugblas-Formmaschine 3 umfaßt einen Extrusions- bzw. Coextrusionskopf 2, dem das zur Herstellung des sauggeblasenen Hohlkörpers benötigte aufbereitete Kunststoff-Material bekanntermaßen mittels eines Extruders und einem sich diesem angeschließenden Verteiler zugeleitet wird. Der Extrusionskopf 2 gibt die für das Saugblasverfahren benötigten Vorformlinge in Form von Schlauchabschnitten 6 in ein aus zwei Formhälften 7a, 7b bestehendes Werkzeug 8 ab, das zur Aufnahme des Vorformlingsschlauches 6 mit einer Artikelkavität 20 ausgebildet ist. Das Abnehmen des Vorformlingsschlauches 6 aus dem Extrusionskopf 2 und Zuführen in das Werkzeug 8 geschieht mittels eines gemäß dem Doppelpfeil 9 heb- und senkbaren Schlauchzubringers 10. Dieser kann, wenn die Vorformlingsschläuche 6 nicht abgerissen werden sollen, Mittel zum Schneiden, Verschweißen sowie auch zum Vorblasen der Vorformlingsschläuche 6 aufweisen. Die Formhälften 7a, 7b des Werkzeuges 8 sind in einer von Schließzylindem beaufschlagbaren, nicht gezeigten Schließeinheit angeordnet.

Das Saugblasen wird anhand des in Figur 1 dargestellten Werkzeugs 8 näher beschrieben, das dort allerdings bereits mit geöffneten Werkzeugen 7a, 7b zur Entnahme des fertigen Artikels 21 gezeigt ist. Zur Aufnahme eines neuen Vorformlings nach der Fertigartikel-Entnahme wird die Blasform bzw. das Werkzeug 8 geschlossen. Eine von unterhalb mittels eines Adapters 22 an das Werkzeug 8 angeschlossene Saugvorrichtung 23 wird eingeschaltet. Ergänzend zu dem damit einsetzenden Ansaugen des neu zugeführten Vorformlings 6 kann Vorblasluft in den Vorformlingsschlauch 6 eingeblasen werden. Der Einsaugprozeß wird durch eine entsprechend darauf abgestimmte Zuführung des Vorformlings 6 mit einem Greifer unterstützt. Dann wird der Schlauchzubringer 10 in seine Ausgangsposition zurückgefahren. Sobald die im Ausführungsbeispiel an der Ober- und der Unterseite des Werkzeuges 8 angeordneten Schieber 24 bzw. 25 zum Verschließen der Artikelkavität 20 zugefahren wurden, wird die Vorblasluft ausgeschaltet und das Ausformen des Vorformlingsschlauches 6 zu dem fertigen Artikel 21 mittels Blasluft über Blasnadeln oder Blasdorne der Saugvorrichtung 23 bewirkt. Wenn der Fertigartikel 21 ausgeformt und abgekühlt ist, werden die Formhälften 7a, 7b wie gemäß der Darstellung in Figur 1 geöffnet, so daß der Fertigartikel 21 zur Entnahme, beispielsweise mittels eines Entnahmegreifers oder einer Maske, freiliegt. Von da kann der Fertigartikel 21 in Nachfolgestationen, z.B. zum Stanzen und zum Nachkühlen, weitertransportiert werden.

Der Extrusions- bzw. Coextrusionskopf 2 ist in einer Linie im Abstand oberhalb des Werkzeuges 8 angeordnet. Zum erneuten Saugblasprozeß, nach der vorherigen Entnahme des fertigen Artikels 21, nimmt der heb- und senkbare Schlauchzubringer 10 den während des Saugblasens des zuvor hergestellten Artikels ohne vom Saugblasprozeß beeinflußter Extrusion kontinuierlich oder diskontinuierlich ausgestoßenen folgenden Vorformlingsschauch 6 von der Düse des Kopfes 2 ab und senkt ihn direkt in das darunter befindliche, dann zum erneuten Saugblasen bereits wieder geschlossene Werkzeug 8 ab.

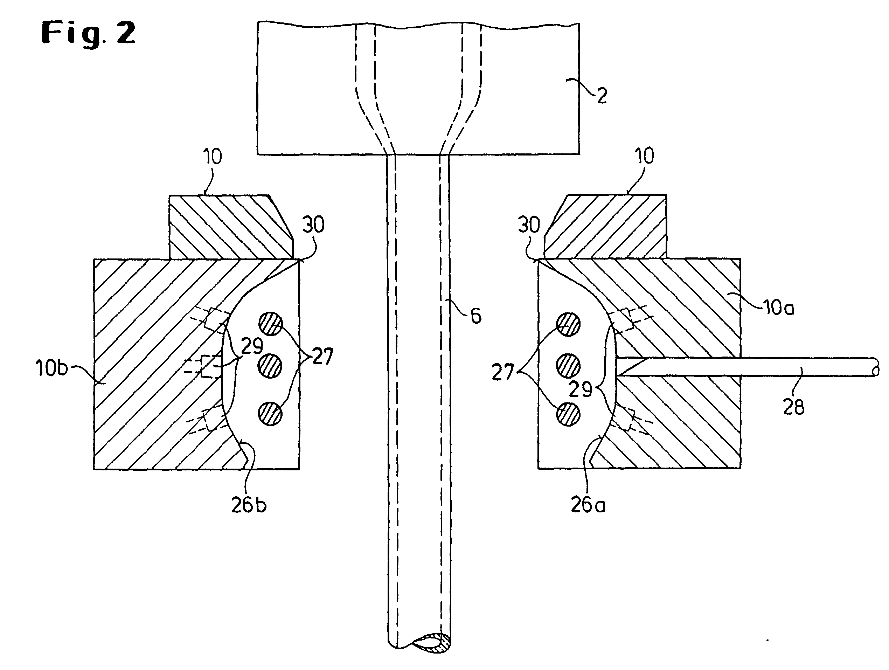

Die Figuren 2 bis 4 zeigen in mehreren Betriebspositionen - und zwar bei der Abnahme eines Vorformlingsschlauches 6 aus dem Extrusions- bzw. Coextrusionskopf 2, d.h. vor dem späteren Einlegen des Vorformlings in das Werkzeug 8 - eine Ausführung eines Schlauchzubringers 10, der hier mit zwei beweglichen Greiferarmen 10a, 10b ausgebildet ist. Diese sind nach Figur 2 aufgefahren und stehen abnahmebereit unterhalb des Extrusions- bzw. Coextrusionskopfes 2.In ihren einander zugewandten Seiten sind die Greiferarme 10a, 10b mit halbschalenartigen Ausnehmungen bzw. Hohlräumen 26a, 26b ausgebildet; darin münden über Zuleitungen 29 an einen nicht dargestellten Vakuumerzeuger angeschlossene Vakuumdüsen 27. Dem Greiferarm 10a ist außerdem ein Blasdorn bzw. -nadel 28 zugeordnet, die sich mit ihrer scharfen Spitze in den von den Teilausnehmungen 26a, 26b gebildeten Greifer-Hohlraum 26 einführen läßt.

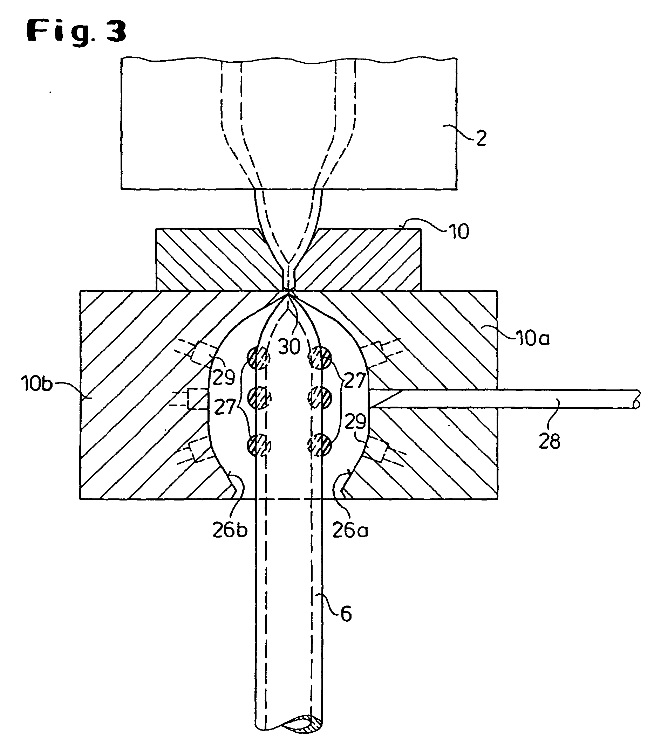

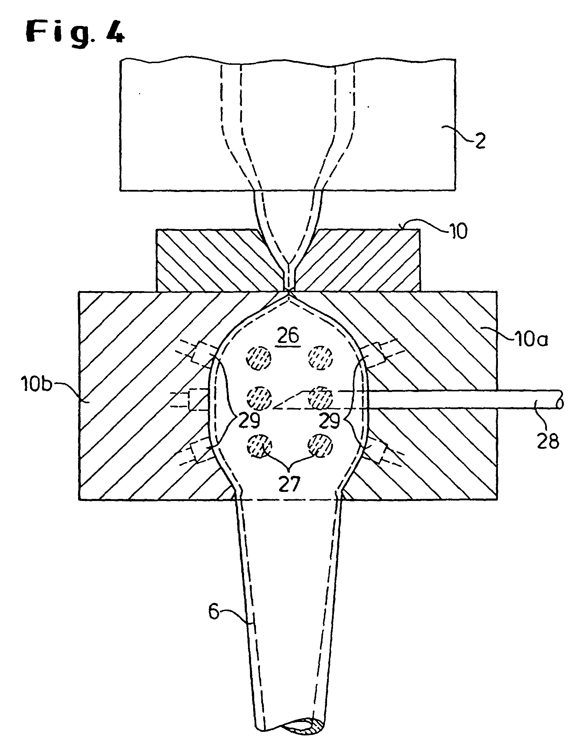

Beim Zufahren der Greiferarme 10a, 10b des Schlauchzubringers 10 wird der Vorformlingsschlauch 6 von voreilenden Kanten 30 (vgl. Fig. 2) der Greiferarme 10a, 10b abgequetscht bzw. -schnitten; er hängt dann gemäß Figur 3 zum Einlegen in das Werkzeug 8 (vgl. Figur 1) frei nach unten durch. Das Beaufschlagen der Vakuumdüsen 27 bewirkt nicht nur einen den Vorformlingsschlauch 6 in den Greiferarmen 10a, 10b unterstützend haltenden Effekt, sondern insbesondere ein Aufweiten des umschlossenen Schlauchendes , wie in Figur 4 gezeigt. Das aufgeweitete Schlauchende erfährt damit eine Stabilisierung die es begünstigt, den Blasdorn 28 durch den Schlauchmantel zu stoßen; der Vorformling 6 kann dann vorgeblasen werden.

## Patentansprüche

1. Verfahren zum Herstellen von hohlkörperförmigen Artikeln (21) aus thermoplastischem Kunststoff durch Saugblasen, umfassend ein aus zwei in eine Offen- und in eine verriegelbare Schließstellung bewegbaren Formhälften (7a, 7b) bestehendes Werkzeug (8), dem zumindest unten ein die Artikelkavität (20) verschließender Schieber (24, 25) zugeordnet ist, eine unten an das Werkzeug (8) angeschlossene Saugvorrichtung (23) und mindestens einen einen Vorformlingsschlauch (6) bereitstellenden Extrusionskopf (2), der von mindestens einem Extruder (4) mit einem Kunststoffmaterial gespeist wird,
**dadurch gekennzeichnet,**
**daß** der Extrusionsprozeß der Vorformlingsbildung vom Prozeß des Saugblasens entkoppelt wird, derart, daß gleichzeitig mit dem Saugblasen eines in das Werkzeug eingeführten Vorformlings zu einem Fertigartikel der jeweils nachfolgende Vorformling extrudiert wird, und wobei die Zuführung des Vorformlings auf den Einsaugprozeß abgestimmt erfolgt.

2. Vorrichtung zum Herstellen von hohlkörperförmigen Artikeln (21) aus thermoplastischem Kunststoff durch Saugblassen, umfassend ein aus zwei in eine Offen- und in eine verriegelbare Schließstellung bewegbaren Formhälften (7a, 7b) bestehendes Werkzeug (8) dem zumindest unten ein die Artikelkavität (20) verschießender Schieber (24,25) zugeordnet ist, eine unten an das Werkzeug (8) angeschlossene Saugvorrichtung (23) und mindestens ein einen Vorformlingsschlauch (6) bereitstellenden Extrusionskopf (2), der von mindestens einem Extruder (4) mit dem Kunststoffmaterial gespeist wird,
**dadurch gekennzeichnet,**
**daß** dem Extrusionskopf (2) ein gleichzeitig mit dem Saugblasen eines in das Werkzeug eingeführten Vorformlings zu einem Fertigprodukt den extrudierten, nachfolgenden Vorformlingsschlauch (6) abnehmender und der Artikelkavität (20) auf den Einsaugprozess abgestimmt zuführender Schlauchzubringer (10) zugeordnet ist.

3. Vorrichtung nach Anspruch 2,
**dadurch gekennzeichnet,**
**daß** der Schlauchzubringern (10) heb- und senkbar ist.

4. Vorrichtung nach Anspruch 2 oder 3,
**dadurch gekennzeichnet,**
**daß** der Schlauchzubringer (10) mit Mitteln zum Schneiden, Verschweißen und Vorblasen der Vorformlingsschläuche (6) versehen ist.

5. Vorrichtung nach Anspruch 3,
**dadurch gekennzeichnet,**
**daß** der Schlauchzubringer (10) als 6-Achsen-Roboter ausgebildet ist.

6. Vorrichtung nach einem der Ansprüche 1 bis 5,
**dadurch gekennzeichnet,**
**daß** der Schlauchzubringer (10) zwei aufeinanderzu und voneinanderweg bewegbare Greiferarme (10a, 10b) aufweist, die mit komplementären halbschalenförmigen Hohlräumen (26a, 26b) ausgebildet sind, in die Vakuumdüsen (27) münden.

7. Vorrichtung nach Anspruch 6,
**gekennzeichnet durch**
einen von außen in den Greiferarm-Hohlraum (26) geführten Blasdorn (28).

## Claims

1. A method for producing hollow-body-shaped articles (21) of thermoplastic material by suction blowing, comprising a tool (8) consisting of two mould halves (7a, 7b) which can be moved into an open and into a lockable closed position, associated with which at the bottom is a slider (24, 25) which closes the article cavity (20), a suction device (23) connected to the tool (8) at the bottom, and at least one extrusion head (2) providing a preform tube (6) which is supplied with a plastic material from at least one extruder (4),
**characterised in**
**that** the extrusion process involving formation of the preform is decoupled from the suction blowing process in such a manner that at the same time as the suction blowing of a preform introduced into the tool to form a finished article, the respectively following preform is extruded and wherein the supply of the preform is matched to the suction process.

2. A device for producing hollow-body-shaped articles (21) of thermoplastic material by suction blowing, comprising a tool (8) consisting of two mould halves (7a, 7b) which can be moved into an open and into a lockable closed position, associated with which at the bottom is a slider (24, 25) which closes the article cavity (20), a suction device (23) connected to the tool (8) at the bottom, and at least one extrusion head (2) providing a preform tube (6) which is supplied with a plastic material from at least one extruder (4),
**characterised in**
**that** associated with the extrusion head (2) is a tube feeder (10) which, at the same time as the suction blowing of a preform introduced into the tool to form a finished product, removes the respectively following preform tube (6) and supplies it to the article cavity (20) matched to the suction process.

3. The device according to claim 2,
**characterised in**
**that** the tube feeder (10) can be raised and lowered.

4. The device according to claim 2 or claim 3,
**characterised in**
**that** the tube feeder (10) is provided with means for cutting, welding and pre-blowing the preform tubes (6).

5. The device according to claim 3,
**characterised in**
**that** the tube feeder (10) is embodied as a six-axis robot.

6. The device according to any one of claims 1 to 5,
**characterised in**
**that** the tube feeder (10) has two gripper arms (10a, 10b) which can be moved towards one another and away from one another, which are constructed with complementary half-shell-shaped cavities (26a, 26b) into which vacuum nozzles (27) discharge.

7. The device according to claim 6,
**characterised by**
a blowing mandrel (28) guided from outside into the gripper arm cavity (26).

## Revendications

1. Procédé de fabrication d'articles sous forme de corps creux (21) en matière thermoplastique par aspiration-soufflage, comprenant un outil (8) constitué de deux moitiés de moule (7a, 7b) déplaçables dans un position d'ouverture et dans une position de fermeture verrouillable, auquel est associé au moins sur le bas un curseur (24, 25) fermant la cavité pour l'article (20), un dispositif d'aspiration (23) raccordé sur le bas de l'outil (8) et au moins une tête d'extrusion (2) mettant à disposition un boudin d'ébauche (6), qui est alimentée avec une matière plastique par au moins une extrudeuse (4),
**caractérisé en ce que**
le processus d'extrusion pour la création de l'ébauche est découplé du processus d'aspiration-soufflage, de façon à ce que simultanément avec l'aspiration-soufflage d'une ébauche introduite dans l'outil en un article fini, l'ébauche respectivement suivante soit extrudée et l'amenée de l'ébauche soit synchronisée avec le processus d'aspiration.

2. Dispositif de fabrication d'articles sous forme de corps creux (21) en matière thermoplastique par aspiration-soufflage, comprenant un outil (8) constitué de deux moitiés de moule (7a, 7b) déplaçables dans un position d'ouverture et dans une position de fermeture verrouillable, auquel est associé au moins sur le bas un curseur (24, 25) fermant la cavité pour l'article (20), un dispositif d'aspiration (23) raccordé sur le bas de l'outil (8) et au moins une tête d'extrusion (2) mettant à disposition un boudin d'ébauche (6), qui est alimentée avec une matière plastique par au moins une extrudeuse (4),
**caractérisé en ce que**
un dispositif d'amenée du boudin (10) recevant le boudin d'ébauche suivant (6) et l'amenant à la cavité pour l'article (20) de façon synchronisée avec le processus d'aspiration, simultanément à l'aspiration-soufflage d'une ébauche introduite dans l'outil en un produit fini est associé à la tête d'extrusion (2).

3. Dispositif selon la revendication 2,
**caractérisé en ce que** le dispositif d'amenée du boudin (10) peut être relevé ou abaissé.

4. Dispositif selon la revendication 2 ou 3,
**caractérisé en ce que** le dispositif d'amenée du boudin (10) est muni de moyens pour couper, souder et préinsuffler les boudins d'ébauches (6).

5. Dispositif selon la revendication 3,
**caractérisé en ce que** le dispositif d'amenée du boudin (10) est conçu sous la forme d'un robot à 6 axes.

6. Dispositif selon l'une quelconque des revendications 1 à 5,
**caractérisé en ce que** le dispositif d'amenée du boudin (10) comporte deux bras de préhension (10a, 10b) pouvant être rapprochés et éloignés l'un de l'autre, qui sont conçus avec des espaces creux complémentaires en forme de demi-coques (26a, 26b), dans lesquels des buses à vide (27) débouchent.

7. Dispositif selon la revendication 6,
**caractérisé par** un tourillon de soufflage (28) guidé par l'extérieur dans l'espace creux du bras de préhension (26).
